# EUROPÄISCHE PATENTANMELDUNG

(11) **EP 4 459 727 A1**
(43) Veröffentlichungstag der Anmeldung: **06.11.2024**
(21) Anmeldenummer: 24173484.7
(22) Anmeldetag: 30.04.2024
(51) Int. Cl.: H01M 10/04, H01M 10/0587, H01M 50/107

(54) **VERFAHREN ZUR HERSTELLUNG EINES AKKUMULATORS UND AKKUMULATOR**

(30) Priorität: 02.05.2023 DE 102023111321
(71) Anmelder: Monbat New Power GmbH, 99734 Nordhausen (DE)
(72) Erfinder: DIEHL, Frank, 22605 Hamburg (DE)
(74) Vertreter: Freischem & Partner Patentanwälte mbB

(57) **Zusammenfassung**

Die Erfindung betrifft ein Verfahren zur Herstellung eines Akkumulators, wobei Metallfolien (3, 23), welche Elektroden des Akkumulators kontaktieren, gemeinsam mit den Elektroden des Akkumulators derart zu einem, zumindest im Wesentlichen, zylindrischen, insbesondere kreiszylindrischen Elektrodenwickel (1) aufgewickelt werden, dass an einer der beiden sich gegenüberliegenden Stirnseiten des Elektrodenwickels (1) ein erster Randbereich einer ersten Metallfolie (23) zur Kontaktierung einer ersten Elektrode gegenüber den anderen schichtförmigen Bestandteilen des Elektrodenwickels (1) vorsteht. Der Elektrodenwickel (1) wird in ein becherförmiges Gehäuseteil (21) mit einem Boden (22) eingebracht und zur Kontaktierung der ersten Elektrode des Akkumulators der erste Randbereich der ersten Metallfolie (23) der ersten Elektrode und/oder ein mit dem ersten Randbereich elektrisch leitend verbundenes erstes Kontaktelement mit dem Boden (22) des Gehäuseteils (21) verklebt.

## Beschreibung

Die Erfindung betrifft ein Verfahren zur Herstellung eines Akkumulators, insbesondere ein Verfahren zur Herstellung einer Elektrodenableitung eines Akkumulators, und einen nach dem erfindungsgemäßen Verfahren herstellbaren Akkumulator.

Bei Akkumulatoren der in Rede stehenden Art sind die Metallfolien, welche insbesondere die Anode und/oder die Kathode des Akkumulators kontaktieren, gemeinsam mit anderen flächigen Bestandteilen des Akkumulators, wie insbesondere den Elektroden des Akkumulators, vorzugsweise spiralförmig, zu einem Elektrodenwickel aufgewickelt.

Derartige Akkumulatoren können dadurch hergestellt werden, dass die Elektrodenwickel in becherförmige Gehäuseteile eingebracht werden. Der becherförmige Gehäuseteil kann mit einem Deckel verschlossen werden, der gegenüber dem Gehäuseteil elektrisch isoliert sein kann. Durch den Deckel hindurch kann ein Pol geführt werden, der mit einer der Metallfolien des Elektrodenwickels elektrisch kontaktiert wird. Die andere Metallfolie des Elektrodenwickels wird mit dem Becher elektrisch kontaktiert, der so den zweiten Pol des resultierenden Akkumulators bildet.

Aus der DE 10 2017 006 229 A1 sind ein Verfahren zur Herstellung eines Akkumulators und ein Akkumulator bekannt, bei dem Randbereiche der Metallfolien zur Kontaktierung der Elektroden an den beiden sich gegenüberliegenden Stirnseiten des Elektrodenwickels gegenüber den anderen schichtförmigen Bestandteilen des Elektrodenwickels vorstehen. Die Randbereiche sind mit Kontaktelementen verschweißt, die wiederum mit Polen verschweißt sind, die an beiden Stirnseiten des kreiszylindrischen Akkumulators durch entsprechende isolierende Deckel hindurchgeführt sind. Die Kontaktierung ermöglicht kurze Strompfade und derartige Akkumulatoren eignen sich gut für Anwendungen, bei denen die Akkumulatoren hohe elektrische Leistungen abgeben müssen. Nachteilig ist jedoch, dass derartige Akkumulatoren einen höheren Bauraumbedarf aufweisen und teurer in der Herstellung sind, da an beiden Stirnseiten des kreiszylindrischen Gehäuses entsprechende Kontaktelemente mit daran angebrachten Polen verbaut werden müssen.

Ein Akkumulator mit einem günstigeren Bauraumbedarf lässt sich herstellen, indem, wie beispielsweise in der DE 10 2022 111 706.5, der Elektrodenwickel mit dem Boden eines becherförmigen Gehäuseteils verschweißt wird. Das Schweißverfahren ist jedoch in der Praxis schwierig zu beherrschen und es besteht insbesondere immer das Risiko, Undichtigkeiten des Gehäuses zu erzeugen, wenn durch das Verschweißen versehentlich Löcher im Boden entstehen.

Aufgabe der Erfindung ist es daher, ein Verfahren zur Herstellung eines Akkumulators und einen Akkumulator zur Verfügung zu stellen, bei denen die vorgenannten Nachteile nicht oder zumindest im geminderten Umfang auftreten.

Die Aufgabe wird gelöst durch ein Verfahren einen Akkumulator mit den Merkmalen der unabhängigen Ansprüche. Die Merkmale der abhängigen Ansprüche betreffen vorteilhafte Ausführungsformen.

Das Verfahren zur Herstellung des Akkumulators sieht vor, dass Metallfolien, welche die Elektroden des Akkumulators kontaktieren, gemeinsam mit den Elektroden des Akkumulators derart zu einem, zumindest im Wesentlichen, zylindrischen, insbesondere kreiszylindrischen, Elektrodenwickel aufgewickelt werden, dass an einer der beiden sich gegenüberliegenden Stirnseiten des Elektrodenwickels ein erster Randbereich einer ersten Metallfolie zur Kontaktierung einer ersten Elektrode gegenüber den anderen schichtförmigen Bestandteilen des Elektrodenwickels vorsteht. Unter den Stirnseiten sind dabei die Seiten des Elektrodenwickels zu verstehen, die den Grundflächen des die geometrische Form des Elektrodenwickels beschreibenden Kreiszylinders entsprechen.

Der Elektrodenwickel wird in ein becherförmiges Gehäuseteil eingebracht und zur Kontaktierung der ersten Elektrode des Akkumulators wird der erste Randbereich der ersten Metallfolie der ersten Elektrode und/oder ein mit dem ersten Randbereich elektrisch leitend verbundenes erstes Kontaktelement mit dem Boden des Gehäuseteils verklebt. Dabei wird der Elektrodenwickel mit dem vorstehenden ersten Randbereich der ersten Metallfolie und/oder das mit dem ersten Randbereich elektrisch leitend verbundenes erste Kontaktelement insbesondere an den Boden des Gehäuseteils angedrückt.

Es hat sich überraschenderweise gezeigt, dass auf diese Weise eine zuverlässige elektrische Verbindung zwischen der ersten Metallfolie bzw. dem ersten Kontaktelement und dem Boden erzielt werden kann. Dabei kommt im Rahmen des Verfahrens zum Herstellen der Verklebung insbesondere ein elektrisch leitfähiger Klebstoff zum Einsatz. Ein derartiger elektrisch leitfähiger Klebstoff hat den Vorteil, dass eine elektrische Verbindung zwischen der ersten Metallfolie bzw. dem ersten Kontaktelement und dem Boden über den Klebstoff zustande kommt. Unter einem elektrisch leitfähigen Klebstoff ist hierbei insbesondere ein dauerhaft elektrisch leitfähiger Klebstoff zu verstehen, also insbesondere auch ein Klebstoff, der nach seinem vollständigen Aushärten eine entsprechende elektrische Leitfähigkeit aufweist.

Bei der ersten Elektrode kann es sich insbesondere um die Kathode handeln. Die Metallfolie, die zur Kontaktierung der ersten Elektrode genutzt wird, und insbesondere das erste Kontaktelement, besteht in diesem Fall vorzugsweise aus Aluminium oder einer Aluminiumlegierung. Das Gehäuseteil und insbesondere der Boden des Gehäuseteils besteht in diesem Fall insbesondere ebenfalls aus Aluminium oder einer Aluminiumlegierung.

Bei der ersten Elektrode kann es sich alternativ um die Anode handeln. Die Metallfolie, die zur Kontaktierung der ersten Elektrode genutzt wird, und insbesondere das erste Kontaktelement, besteht in diesem Fall vorzugsweise aus Kupfer oder einer Kupferlegierung. Das Gehäuseteil und insbesondere der Boden des Gehäuseteils besteht in diesem Fall insbesondere aus einem Stahl.

Das Gehäuseteil kann insbesondere tiefgezogen sein. Es hat sich gezeigt, dass mittels des Tiefziehens, das vorzugsweise in mehreren Stufen erfolgt, eine hinreichende Maßhaltigkeit des Gehäuseteils und insbesondere des Bodens erzielt werden kann, um die Verklebung reproduzierbar durchzuführen.

Das Verfahren sieht insbesondere vor, dass der Randbereich der ersten Metallfolie vor dem Verkleben des Randbereichs mit dem Boden, zumindest in Teilabschnitten, derart umgebogen wird, dass sich eine flächige Verklebung von zumindest Teilabschnitten des Randbereichs mit dem Boden ergibt. Es hat sich gezeigt, dass die Verklebung des Bodens mit der Metallfolie verbessert werden kann, wenn die Metallfolie und der Boden flächig aneinander anliegen. Dazu kann es sinnvoll sein, wenn der Randbereich oder zumindest Teilabschnitte des Randbereichs umgebogen werden. Der Randbereich bzw. die Teilabschnitte des Randbereichs werden in diesem Zusammenhang insbesondere um, zumindest im Wesentlichen, 90° umgebogen.

Um das Umbiegen von Teilabschnitten zu erleichtern, kann der Randbereich, insbesondere vor dem Umbiegen der Teilbereiche, eingeschnitten werden, sodass Teilabschnitte des Randbereichs erzeugt werden, die unabhängig voneinander umgebogen werden können. Dies kann insbesondere bei einem kreiszylindrischen Elektrodenwickel und einem entsprechenden spiralförmigen Verlauf des von dem Elektrodenwickel hervorstehenden Randbereichs das Umbiegen desselben um ca. 90° signifikant erleichtern. Hierbei kann es vorkommen, dass sich Teilabschnitte, insbesondere benachbarte Teilabschnitte, des Randbereichs nach dem Umbiegen überlappen.

Alternativ und/oder ergänzend ist es möglich, dass der Randbereich vor dem Verkleben des mit dem Randbereich verbundenen ersten Kontaktelements mit dem Boden mit dem ersten Kontaktelement verschweißt wird. Das Verfahren sieht dann insbesondere vor, dass der Elektrodenwickel mit dem angeschweißten Kontaktelement in das Gehäuseteil zum Zweck des Verklebens eingebracht wird. Das erste Kontaktelement lässt sich signifikant leichter mit dem Randbereich verschweißen, wenn das Verschweißen vor dem Einbringen des Elektrodenwickels das Gehäuseteil erfolgt. Die Verklebung zwischen dem ersten Kontaktelement und dem Boden hingegen kann weitgehend unabhängig davon erfolgen, ob das erste Kontaktelement bereits mit dem Elektrodenwickel verschweißt ist. Von daher ist die Herstellungsreihenfolge, zunächst das erste Kontaktelemente mit dem Elektrodenwickel zu verschweißen und dieses erst dann in das Gehäuseteil einzubringen, um das erste Kontaktelement mit dem Boden zu verkleben, vorteilhaft.

Bei dem Akkumulator handelt es sich vorzugsweise um einen Lithium-Ionen-Akkumulator. Lithium-Ionen-Akkumulatoren ermöglichen die Speicherung vergleichsweise große Mengen Energie bei geringem Gewicht und Raumbedarf. Das erfindungsgemäße Verfahren bietet daher insbesondere bei der Herstellung dieser Akkumulatoren einen hohen Mehrwert.

Bevorzugt weist der Akkumulator eine, zumindest im Wesentlichen, zylindrische Geometrie auf. Unter einer zumindest im Wesentlichen zylindrischen Geometrie ist insbesondere eine Geometrie zu verstehen, bei der die Hauptabmessungen des Akkumulators eine zylindrische Geometrie bilden. Einzelne Elemente des Akkumulators, beispielsweise die Pole, können hierbei eine von einer strengen Zylinderform abweichende Gestaltung aufweisen. Akkumulatoren mit zylindrischer Geometrie sind als Bauform bereits standardisiert, weshalb regelmäßig ein einfacher Austausch der Akkumulatoren möglich ist.

Der Akkumulator nimmt durch die spiralförmige Aufwicklung insbesondere eine, zumindest im Wesentlichen, kreiszylindrische Form an. Die Achse der spiralförmigen Wicklung entspricht hierbei bevorzugt der Mittelachse des Zylinders. Unter der Achse ist hierbei insbesondere das linienförmige Zentrum der spiralförmigen Wicklung zu verstehen. Eine physische Achse im Sinne eines entsprechenden Bauteils kann vorhanden sein, ist jedoch nicht zwingend notwendig.

Das Verfahren kann vorsehen, dass zur Kontaktierung einer zweiten Elektrode des Akkumulators eine zweite Metallfolie zur Kontaktierung der zweiten Elektrode mit einem zweiten Kontaktelement verschweißt wird. Hierbei ist das Kontaktelement insbesondere flächig und rechtwinklig zur Achse des Elektrodenwickels orientiert. Dabei dient die Ordnungszahl "zweiten" lediglich der sprachlichen Unterscheidung dieses Kontaktelements von dem ersten Kontaktelement. Keinesfalls setzt das zweite Kontaktelement zwingend das Vorhandensein des optionalen ersten Kontaktelements voraus.

Es ist vorteilhaft, wenn die zweite Metallfolie, insbesondere der mit dem Boden dem zweiten Kontaktelement zu verbindende Bereich der zweiten Metallfolie, gegenüber den anderen flächigen bzw. schichtförmigen Bestandteilen des Akkumulators, wie beispielsweise der Kathode, der Anode oder einer weiteren Metallfolie, in Richtung des zweiten Kontaktelements, vorzugsweise in Richtung der Achse des Elektrodenwickels, vorsteht.

Das Verfahren kann vorsehen, dass zum Verschweißen des ersten Randbereichs mit dem ersten Kontaktelement und/oder zum Verschweißen des zweiten Randbereichs mit dem zweiten Kontaktelement der erste und/oder der zweite Randbereich mit einer rechtwinklig zur jeweiligen Metallfolie orientierten ersten Fläche des jeweiligen Kontaktelements in Kontakt gebracht und durch die Beaufschlagung einer von der ersten Fläche des jeweiligen Kontaktelements abgewandten zweiten Fläche des jeweiligen Kontaktelements mit einem Laserstrahl mit dem jeweiligen Kontaktelement verschweißt wird.

Es ist vorteilhaft, wenn zum Verschweißen des ersten Randbereichs mit dem ersten Kontaktelement und/oder zum Verschweißen des zweiten Randbereichs mit dem zweiten Kontaktelement ein Bereich der ersten Metallfolie und/oder ein Bereich der zweiten Metallfolie umgebogen wird. Das Umbiegen des Bereichs der jeweiligen Metallfolie kann zweckmäßigerweise vor und/oder während dem Aufwickeln der Metallfolie erfolgen. Es kann eine Vielzahl von Biegeverfahren zum Einsatz kommen, bevorzugt handelt es sich um ein Bördelverfahren. Das Verschwei-ßen der Metallfolie mit dem ersten Kontaktelement und/oder dem zweiten Kontaktelement erfolgt dann vorzugsweise im Bereich der erzeugten Biegung. Hierdurch wird die Anlagefläche der Metallfolie am ersten Kontaktelement und/oder am zweiten Kontaktelement vergrößert, was sich positiv auf die Verschweißung auswirkt. Bei der Biegung kann es sich beispielsweise um eine Umbiegung um 180° handeln. Es sind jedoch auch andere Gestaltungen der Biegung denkbar, insbesondere kann auch ein mehrfaches Umbiegen erfolgen. Es versteht sich in diesem Zusammenhang, dass unter dem Randbereich, der mit dem Kontaktelement verbunden wird, im Zweifel nicht der Randbereich der ursprünglichen Metallfolie vor dem Umbiegen zu verstehen ist, sondern vielmehr der Teil der Metallfolie, der nach dem Umbiegen der Metallfolie den durch das Umbiegen erzeugten neuen Rand der Metallfolie bildet.

Hierbei ist es vorteilhaft, wenn die erste Metallfolie und/oder die zweite Metallfolie gegenüber den anderen schichtförmigen Bestandteilen des Akkumulators wenigstens 1 mm, vorzugsweise wenigstens 2 mm, und/oder höchstens 8 mm, vorzugsweise höchstens 6 mm, vorsteht. Dieser vorstehende Bereich der Metallfolie ermöglicht es, die Metallfolie mit dem erfindungsgemäßen Verfahren zu kontaktieren, wobei das Risiko, andere schichtförmige Bestandteile des Akkumulators durch die Verschweißung zu beeinträchtigen und/oder zu beschädigen, ausgeschlossen oder zumindest gesenkt wird.

Die Dicke des ersten und/oder zweiten Kontaktelements beträgt bevorzugt wenigstens 0,05 mm, besonders bevorzugt wenigstens 0,15 mm, und/oder bevorzugt höchstens 1,5 mm, besonders bevorzugt höchstens 0,6 mm.

Es ist vorteilhaft, wenn die erste und/oder zweite Metallfolie an einen vorspringenden Bereich der ersten Fläche des ersten Kontaktelements und/oder der ersten Fläche des zweiten angeschweißt wird. Ein derartiger vorspringender Bereich an dem ersten Kontaktelement und/oder dem zweiten Kontaktelement ermöglicht es, einen definierten lokalen Kontakt zwischen der Metallfolie und dem ersten Kontaktelement und/oder dem zweiten Kontaktelement herzustellen, an dem die Schwei-ßung erfolgt. Dabei weist das jeweilige Kontaktelement bevorzugt an seiner dem vorspringenden Bereich gegenüberliegenden Fläche einen zurückspringenden Bereich auf. Dieser zurückspringende Bereich ist bevorzugt hinsichtlich seiner Form komplementär zu dem vorspringenden Bereich gestaltet. dabei können der vorspringende Bereich und der zurückspringende Bereich gemeinsam als Sicke in dem jeweiligen Kontaktelement ausgeführt sein. Diese Gestaltung hat den Vorteil, dass sie in einfacher Weise herzustellen ist und dazu führt, dass die Dicke des jeweiligen Kontaktelements im betroffenen Bereich zumindest annähernd konstant bleibt.

Der vorspringende Bereich springt bevorzugt um wenigstens 0,3 mm, besonders bevorzugt um wenigstens 0,5 mm, und/oder bevorzugt um höchstens 2 mm, besonders bevorzugt um höchstens 1,5 mm, gegenüber der umliegenden ersten Fläche des jeweiligen Kontaktelements vor.

Der jeweilige vorspringende Bereich bzw. die jeweilige Sicke ist bevorzugt linienförmig gestaltet und weist eine Breite von bevorzugt wenigstens 0,5 mm, besonders bevorzugt von wenigstens 1 mm, und/oder bevorzugt von höchstens 5 mm, besonders bevorzugt von höchstens 3 mm, auf. Dabei kreuzt sich in der Ebene, in der die jeweilige Metallfolie mit einem vorspringenden Bereich in Kontakt gelangt, der vorspringende Bereich bevorzugt mit der Metallfolie. Bei gefalteter und/oder aufgewickelten Bauweise des Akkumulators ergeben sich so eine Mehrzahl einzelner Berührungspunkte zwischen dem Randbereich der jeweiligen Metallfolie und dem jeweiligen Kontaktelement, was zu einer zuverlässigen Verschweißung an diesen Stellen führt.

Die erste Metallfolie und/oder die zweite Metallfolie weist bevorzugt eine Dicke von wenigstens 0,001 mm, besonders bevorzugt von wenigstens 0,005 mm, und/oder bevorzugt von höchstens 0,02 mm, besonders bevorzugt von höchstens 0,012 mm auf.

Es ist vorteilhaft, wenn ein Polelement zur Bildung des Pols des Akkumulators mit dem zweiten Kontaktelement verbunden, insbesondere verschweißt, wird. Auf diese Weise kann das zweite Kontaktelement in seiner Geometrie, die bevorzugt flächig bzw. plättchenförmig ist, unabhängig von der Form des Pols gestaltet werden. Dies ist insbesondere deswegen von Vorteil, da die Form des Pols Beschränkungen unterliegt, die regelmäßig von der geplanten Verwendung des hergestellten Akkumulators und/oder technischen Standards abhängen.

Die Verbindung des Polelements mit dem zweiten Kontaktelement kann beispielsweise durch eine Überlappungs-Verschweißung oder eine Kehlnaht-Verschweißung erfolgen.

In vorteilhafter Weise kann die Verbindung des Polelements mit dem zweiten Kontaktelement mit demselben Laser erfolgen wie die Verschweißung der Metallfolie mit dem zweiten Kontaktelement. Dies ermöglicht es beispielsweise, die Verschweißung der Metallfolie mit dem zweiten Kontaktelement und die Verschweißung des Polelements mit dem Kontaktelement in der gleichen Vorrichtung vorzunehmen, was die Herstellung des Akkumulators vereinfacht.

Das Polelement kann beispielsweise ein Gewinde zur Bildung des Pols des Akkumulators aufweisen. Mit einem derartigen Gewinde kann der Akkumulator zuverlässig elektrisch mit der von dem Akkumulator versorgten Einrichtung verbunden werden.

Es ist vorteilhaft, wenn das Polelement eine Dichtfläche aufweist. Die Dichtfläche dient insbesondere der Verbindung des Polelements mit dem Gehäuse des Akkumulators. Auf diese Weise kann ein dichter und vorzugsweise elektrisch isolierter Akkumulator geschaffen werden, wobei das Polelement zum Zwecke der elektrischen Kontaktierung des Akkumulators zugänglich bleibt. Die elektrische Isolierung des Akkumulators kann zwischen dem Gehäuseteil und einem Deckel des Gehäuses und/oder dem Polelement und einem Deckel des Gehäuses angeordnet sein.

Bevorzugt überdeckt das Polelement - zumindest teilweise - Schweißnähte zum Verbinden der zweiten Metallfolie mit dem zweiten Kontaktelement. Eine solche Bauweise des Akkumulators lässt sich insbesondere erzeugen, indem zunächst die zweite Metallfolie mit dem zweiten Kontaktelement, und danach das zweite Kontaktelement mit dem Polelement verschweißt wird. Auf diese Weise kann das Polelement und insbesondere die Dichtfläche des Polelements in einem Bereich auf der zweiten Fläche des zweiten Kontaktelements angeordnet werden, der ebenfalls zum Verschweißen des zweiten Kontaktelements mit der Metallfolie genutzt wird.

Es ist vorteilhaft, wenn das Polelement beim Verschweißen mit dem zweiten Kontaktelement an das zweite Kontaktelement angepresst wird. Es hat sich gezeigt, dass auf diese Weise die Bildung von Spalten, zu denen es zwischen dem Polelement und dem zweiten Kontaktelement kommen kann, wirksam verhindert werden kann.

Bevorzugt handelt es sich bei dem Laser, mit dem die erste Metallfolie mit dem ersten Kontaktelement, die zweite Metallfolie mit dem zweiten Kontaktelement und/oder das zweite Kontaktelement mit dem Polelement verschweißt wird, um einen Faserlaser. Faserlaser, die auch als Faser bezeichnet werden, nutzen den dotierten Kern einer Glasfaser als aktives Medium. Der Vorteil der Faserlaser ist, dass durch die mögliche große Länge der laseraktiven Faser eine hohe Verstärkung möglich ist.

Der Laser, mit dem die erste Metallfolie mit dem ersten Kontaktelement, die zweite Metallfolie mit dem zweiten Kontaktelement und/oder das zweite Kontaktelement mit dem Polelement verschweißt wird, wird hierbei vorzugsweise kontinuierlich, also als Dauerstrich-Laser, betrieben. Bei diesem Betrieb wird der Laserstrahl insbesondere nicht gepulst. Es hat sich gezeigt, dass sich mit dem kontinuierlichen Betrieb des Lasers besonders gute Ergebnisse hinsichtlich der Verschweißung erzielen lassen.

Bevorzugt beträgt die mittlere Leistung, insbesondere die konstante Leistung des Lasers im kontinuierlichen Betrieb des Lasers beim Verschweißen der ersten Metallfolie mit dem ersten Kontaktelement und/oder der zweiten Metallfolie mit dem zweiten Kontaktelement wenigstens 100 W, besonders bevorzugt wenigstens 200 W und/oder höchstens 700 W, besonders bevorzugt höchstens 500 W. Bei diesen Leistungen konnten besonders gute Ergebnisse hinsichtlich der Verschweißung erzielt werden.

Wenn mit dem Laser das Polelement mit dem zweiten Kontaktelement verschweißt wird, so ist es sinnvoll, die Laserleistung zu diesem Zweck zu erhöhen. Beim Verschweißen des Polelements mit dem zweiten Kontaktelement beträgt die mittlere Leistung, insbesondere die konstante Leistung des Lasers im kontinuierlichen Betrieb bevorzugt wenigstens 500 W, besonders bevorzugt wenigstens 700 W, und/oder bevorzugt höchstens 1500 W, besonders bevorzugt höchstens 1000 W.

Die Wellenlänge des Lasers, mit dem die erste Metallfolie mit dem ersten Kontaktelement, die zweite Metallfolie mit dem zweiten Kontaktelement und/oder das zweite Kontaktelement mit dem Polelement verschweißt wird, beträgt vorzugsweise 1070 nm. Mit einem Laser dieser Wellenlänge können gute Ergebnisse erzielt werden, zudem sind Laser dieser Wellenlänge kommerziell verfügbar.

Bevorzugt wird ein Singlemode-Laser zum Verschweißen der ersten Metallfolie mit dem ersten Kontaktelement, der zweiten Metallfolie mit dem zweiten Kontaktelement und/oder des zweite Kontaktelements mit dem Polelement verwendet. Bei diesen Lasern werden lediglich Wellen einer einzigen gewünschten Mode verstärkt, während andere Moden unterdrückt werden. Derartige Laser weisen im Idealfall lediglich eine einzige, schmale Spektrallinie auf. Hierdurch erreicht der Laserstrahl eine hohe optische Qualität, was sich insbesondere auf dessen gute Fokussierbarkeit auswirkt.

Bevorzugt wird der Laser, mit dem die erste Metallfolie mit dem ersten Kontaktelement, die zweite Metallfolie mit dem zweiten Kontaktelement und/oder das zweite Kontaktelement mit dem Polelement verschweißt wird, mit einer Fokussieroptik fokussiert. Eine solche Fokussieroptik ermöglicht die Bündelung des Laserstrahls. Es hat sich gezeigt, dass für das erfindungsgemäße Verfahren Fokussieroptiken mit einer Brennweite von wenigstens 10 mm, vorzugsweise wenigstens 100 mm und/oder höchstens 5000 mm, vorzugsweise höchstens 500 mm, zu besonders guten Ergebnissen führen. Dies gilt sowohl für die Verschweißung der jeweiligen Metallfolie mit dem entsprechenden Kontaktelement, als auch für die Verschweißung des zweiten Kontaktelements mit dem Polelement.

Bevorzugt weist der verwendete Laserstrahl, mit dem die erste Metallfolie mit dem ersten Kontaktelement, die zweite Metallfolie mit dem zweiten Kontaktelement und/oder das zweite Kontaktelement mit dem Polelement verschweißt wird, einen Fokusdurchmesser von wenigstens 1 µm, vorzugsweise wenigstens 10 µm und/oder höchstens 500 µm, vorzugsweise höchstens 50 µm auf. Es hat sich gezeigt, dass sich mit diesen Fokusdurchmessern eine besonders gute Verschweißung der jeweiligen Metallfolie und/oder des Polelements mit dem entsprechenden Kontaktelement erzielen lässt. Dies gilt sowohl für die Verschweißung der jeweiligen Metallfolie mit dem entsprechenden Kontaktelement, als auch für die Verschweißung des zweiten Kontaktelements mit dem Polelement.

Bevorzugt wird der Auftreffpunkt des Lasers auf dem jeweiligen Kontaktelement, bei dem es sich vorzugsweise um den Fokus des Laserstrahls handelt, entlang einer Bewegungsbahn bewegt, die sich aus der Überlagerung einer Vorschubbewegung und einer oszillierenden Bewegung ergibt. Beim Verschweißen des zweiten Kontaktelements mit dem Polelement gilt dies gegebenenfalls für den Auftreffpunkt des Laserstrahls auf dem Polelement.

Bei der Vorschubbewegung handelt es sich um die Bewegung, mit der der Auftreffpunkt des Lasers dem Verlauf der herzustellenden Schweißnaht folgt. Die Geschwindigkeit, mit der der Auftreffpunkt sich auf der Oberfläche des jeweiligen Kontaktelements bzw. gegebenenfalls des Polelements entlang der Schweißnaht bewegt, wird in diesem Zusammenhang als Vorschubgeschwindigkeit bezeichnet. Die Vorschubgeschwindigkeit beträgt vorzugsweise wenigstens 10 mm/s, vorzugsweise wenigstens 70 mm/s, und/oder höchstens 200 mm/s, vorzugsweise höchstens 150 mm/s. Es hat sich gezeigt, dass sich mit diesen Vorschubgeschwindigkeiten eine vergleichsweise schnelle Herstellung der Schweißnähte mit gleichzeitig hoher Qualität erzielen lässt. Es versteht sich, dass - im Fall der Überlagerung der Vorschubbewegung mit einer oszillierenden Bewegung - nicht die absolute Geschwindigkeit der resultierenden Bewegung in Vorschubrichtung, sondern eine mittlere Bewegungsgeschwindigkeit in Vorschubrichtung als Vorschubgeschwindigkeit anzusehen ist.

Die oszillierende Bewegung, die vorzugsweise von der Vorschubbewegung überlagert wird, weist vorzugsweise eine Frequenz von wenigstens 100 Hz, vorzugsweise wenigstens 500Hz und/oder höchstens 5000 Hz, vorzugsweise höchstens 1500 Hz auf. Die Amplitude der oszillierenden Bewegung beträgt vorzugsweise wenigstens 0,02 mm, vorzugsweise wenigstens 0,1mm, und/oder höchstens 0,5 mm, vorzugsweise höchstens 1mm. Es hat sich gezeigt, dass eine örtliche Leistungsmodulation realisiert werden kann, die eine besonders gute Schmelzbadkontrolle ermöglicht.

Es kann sich bevorzugt um eine kreisförmige oszillierende Bewegung handeln. In diesem Fall entspricht der Radius des durch die oszillierende Bewegung beschriebenen Kreises der Amplitude im Hinblick auf die vorstehend angegebenen Werte. Im Fall komplexer oszillierender Bewegungen, wie beispielsweise einer elliptischen oszillierenden Bewegung, ist entsprechend eine mittlere Amplitude als Amplitude anzusehen.

Das Verfahren kann insbesondere vorsehen, dass die Leistung des Laserstrahls während des Verschweißens der Metallfolie dem ersten Kontaktelement und/oder dem zweiten Kontaktelement variiert wird. Insbesondere kann die Leistung des Laserstrahls bei zu Beginn der Herstellung einer Schweißnaht gesteigert und/oder zum Ende der Herstellung einer Schweißnaht abgesenkt wird. Das Steigern und/oder Absenken der Leistung kann kontinuierlich, beispielsweise in Gestalt einer Rampe, erfolgen. Es hat sich gezeigt, dass dadurch insbesondere eine Bildung von Löchern im Kontaktelement während des Schweißens vermieden werden kann.

Für das Herstellen des Akkumulators ist es vorteilhaft, wenn das Verschweißen der Metallfolien mit dem jeweiligen Kontaktelement und/oder das Umbiegen der Metallfolien erfolgt, bevor der Elektrodenwickel in das Gehäuseteil eingebracht wird und/oder bevor der erste Randbereich und/oder das erste Kontaktelement vor dem Einbringen in das Gehäuseteil mit, insbesondere leitfähigem, Klebstoff versehen wird. Alternativ und/oder ergänzend kann der Klebstoff auch vor dem Einbringen des Elektrodenwickels in das Gehäuseteil in das Gehäuseteil eingebracht werden. Hierbei wird insbesondere der Boden des Gehäuseteils mit dem Klebstoff versehen, bevor der Elektrodenwickel in das Gehäuseteil eingebracht wird.

Nach dem Einbringen des Elektrodenwickels in das Gehäuseteil und insbesondere nach dem Verkleben des Bodens mit dem ersten Kontaktelement und/oder dem ersten Randbereich kann der Akkumulator mit einem Deckel versehen werden. Dabei kann das Verfahren vorsehen, dass ein Deckel an dem Gehäuseteil angebracht wird. Dies kann beispielsweise durch Verschweißen, alternativ und/oder ergänzend auch beispielsweise durch ein Umbördeln, von Randbereichen des Deckels und des Gehäuseteils erfolgen.

Nach dem Einbringen des Elektrodenwickels in das Gehäuseteil und insbesondere nach dem Verkleben des Bodens mit dem ersten Kontaktelement und/oder dem ersten Randbereich, weiter insbesondere nach dem Versehen des Akkumulators mit einem Deckel, kann der Akkumulator mit einem Elektrolyten befüllt werden. Das Befüllen mit dem Elektrolyten erfolgt insbesondere durch eine hierfür im Ackumulator vorgesehene Einfüllöffnung, die nach dem Befüllen des Akkumulators mit dem Elektrolyten verschlossen wird.

Das Verfahren kann hierbei vorsehen, dass ein definiertes Zeitintervall zwischen dem Einbringen des Klebstoffs und dem Befüllen des Akkumulators mit dem Elektrolyten eingehalten oder zumindest nicht unterschritten wird. Hierdurch wird dem Klebstoff Zeit zum Aushärten verschafft, bevor der Klebstoff dem Elektrolyten ausgesetzt wird.

Die Erfindung betrifft weiterhin einen Akkumulator, der mit dem vorstehend beschriebenen Verfahren herstellbar ist.

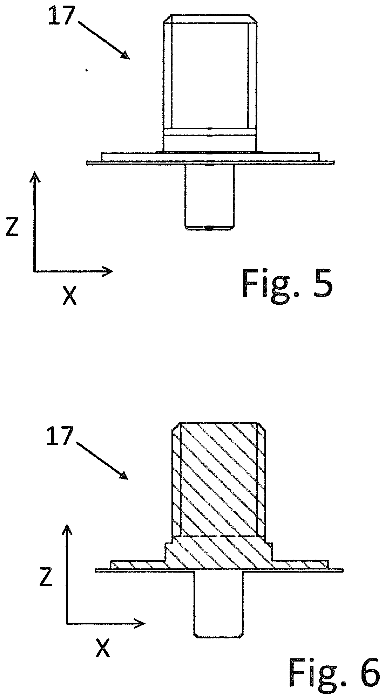

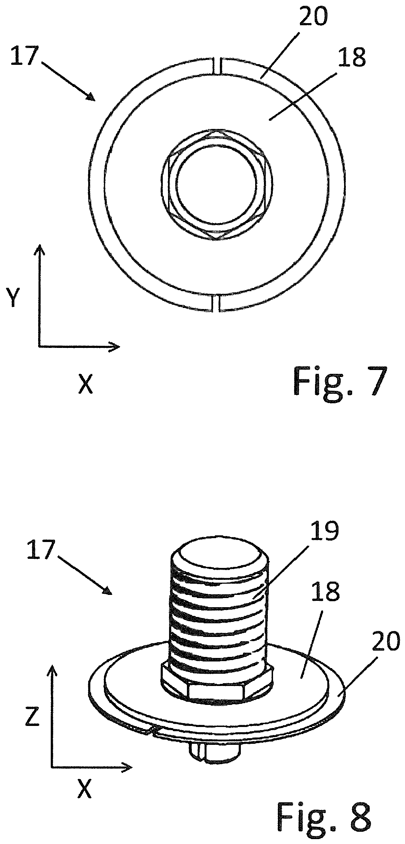

Die Erfindung wird im Folgenden anhand der Figuren 1 bis 10 und durch Ausführungsbeispiele schematisch näher erläutert.
Fig. 1 zeigt eine schematische perspektivische Darstellung eines Elektrodenwickels eines beispielhaften, mit dem erfindungsgemäßen Verfahren hergestellten Akkumulators.
Fig. 2 zeigt eine schematische Darstellung eines beispielhaften Kontaktelements in einer Draufsicht.
Fig. 3 zeigt eine Detaildarstellung einer beispielhaften erfindungsgemäßen Verschweißung der Metallfolie mit dem Kontaktelement.
Fig. 4 zeigt eine schematische Darstellung einer beispielhaften Bewegungsbahn des Lasers beim Verschweißen.
Fig. 5 zeigt eine Seitenansicht eines beispielhaften Polelements.
Fig. 6 zeigt das Polelement in eine Schnittdarstellung.
Fig. 7 zeigt das Polelement in einer Draufsicht.
Fig. 8 zeigt das Polelement in einer perspektivischen Darstellung,
Fig. 9 zeigt eine Schnittdarstellung eines Beispielhaften Akkumulators,
Fig. 10 zeigt eine Schnittdarstellung eines Beispielhaften Akkumulators nach einem weiteren Ausführungsbeispiel.

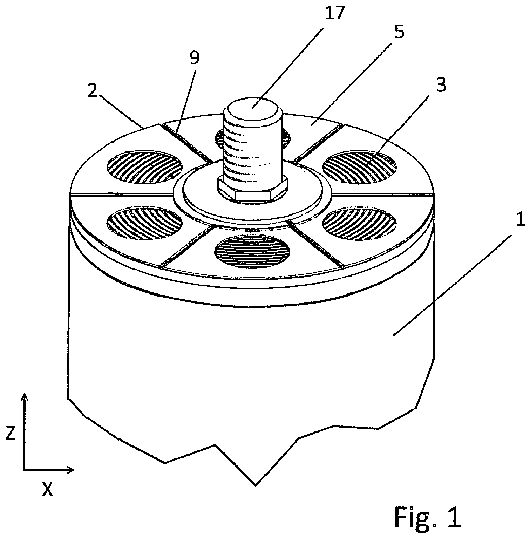

Der beispielhafte Akkumulator weist vorteilhafterweise ein zweites Kontaktelement 2 auf, welches mit einer zweiten Metallfolie 3 eines Elektrodenwickels 1 verschweißt ist. Zur Herstellung des in Fig. 1 dargestellten Elektrodenwickels 1 wird ein Randbereich der zweiten Metallfolie 3 mit einer ersten Fläche 4 des Kontaktelements 2 in Kontakt gebracht. Durch die Beaufschlagung einer von der ersten Fläche 4 des zweiten Kontaktelements 2 abgewandten zweiten Fläche 5 des zweiten Kontaktelements 2 mit einem Laserstrahl 6 wird das zweite Kontaktelement 2 mit der zweiten Metallfolie 3 verschweißt.

Dabei ist im Darstellungsbeispiel die zweite Metallfolie 3 mit weiteren flächigen Bestandteilen des Akkumulators, insbesondere den Elektroden, zu einer spiralförmigen Wicklung aufgewickelt. Hieraus ergibt sich ein kreiszylindrischer Aufbau des Elektrodenwickels 1. Die zweite Metallfolie 3 ist im gezeigten Beispiel rechtwinklig zur ersten Fläche 4 des zweiten Kontaktelements 2 angeordnet.

Gemäß einer vorteilhaften Ausführungsform weist das zweite Kontaktelement 2 im dargestellten Beispiel eine Öffnung 7, bevorzugt eine Mehrzahl von Öffnungen 7 auf.

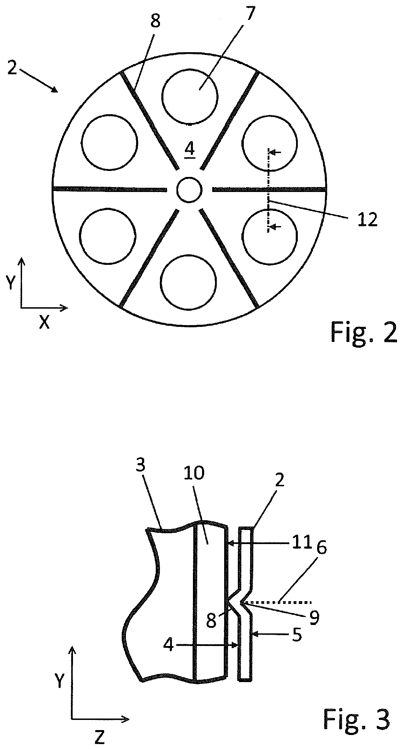

Wie in Fig. 3 dargestellt ist, weist die erste Fläche 4 des zweiten Kontaktelements 2 im gezeigten Beispiel eine Mehrzahl vorspringender Bereiche 8 auf. Die vorspringenden Bereiche 8 sind vorteilhaft als Sicken 9 ausgeführt. Die zweite Metallfolie 3 und die vorspringenden Bereiche 8 sind in vorteilhafter Weise derart zueinander orientiert, dass sie sich kreuzen.

Im gezeigten Beispiel weist das zweite Kontaktelement 2 eine Dicke von 0,3 mm auf. Die vorspringenden Bereiche 8 springen gegenüber der ersten Fläche um 0,4 mm vor.

Die zweite Metallfolie 3 weist im gezeigten Beispiel einen umgebogenen Bereich 10 auf. Die zweite Metallfolie 3 liegt im Bereich der Biegung 11 an dem vorspringenden Bereich 9 der ersten Fläche 4 des zweiten Kontaktelements 2 an. Die Dicke der zweiten Metallfolie 3 beträgt bevorzugt 0,01 mm.

Zur besseren Übersichtlichkeit ist die der Fig. 3 entsprechende Schnittlinie 12 in Fig. 2 schematisch eingezeichnet.

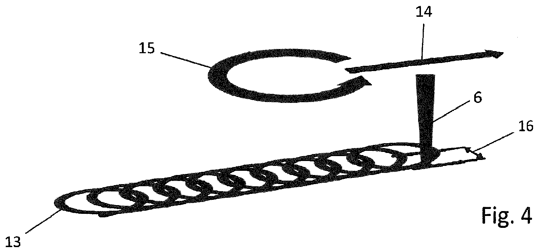

Vorzugsweise werden die zweite Metallfolie 3 und das zweiten Kontaktelement 2 jeweils mit einem Singlemode-Faserlaser mit einer Wellenlänge von 1070 nm verschweißt. Dabei ergibt sich die in Fig. 4 schematisch dargestellte Bewegungsbahn 13 des Laserstrahls aus der Überlagerung einer Vorschubbewegung 14 und einer kreisförmig oszillierenden Bewegung 15.

In vorteilhafter Weise kann der Laser im Rahmen des erfindungsgemäßen Verfahrens ebenfalls dazu verwendet werden, ein Polelement 17 an das zweite Kontaktelement 2 anzuschweißen. Das Polelement 17 weist im gezeigten Beispiel eine Dichtfläche 18 auf. Es dient dazu, einen Pol des Akkumulators zur Verfügung zu stellen, der im gezeigten Beispiel zweckmäßigerweise ein Gewinde 19 aufweist. Wie sich insbesondere aus dem Vergleich der Fig. 1 und der Fig. 2 ergibt, überdeckt das Polelement 17 mit seiner Dichtfläche 18 teilweise die Sicken 9, entlang derer die Schweißnähte zwischen dem zweiten Kontaktelement 2 und der zweiten Metallfolie 3 ausgeführt sind.

Das Anschweißen des Polelements 17 kann beispielsweise im Bereich eines Verbindungsbereichs 20 des Polelements erfolgen. Im gezeigten Beispiel umgibt der Verbindungsbereich 20 die Dichtfläche 18.

Zweckmäßigerweise wird zum Verschweißen des Polelements 17 mit dem zweiten Kontaktelement 2 die Laserleistung auf beispielsweise 800 W erhöht. Die Brennweite der verwendeten Fokussieroptik beträgt im Ausführungsbeispiel 330 mm. Die Vorschubbewegung 14 des Laserstrahls wird auch beim beispielhaften Anschwei-ßen des Polelements von einer oszillierenden Bewegung 15 überlagert. Die Frequenz der kreisförmig oszillierenden Bewegung beträgt beispielhaft 800 Hz, die Amplitude 0,2 mm. Die Vorschubgeschwindigkeit kann beispielsweise 100 mm/s betragen. Im gezeigten Beispiel besteht das Polelement 17 in vorteilhafter Weise aus dem gleichen Material wie das zweite Kontaktelement 2, bevorzugt aus Kupfer.

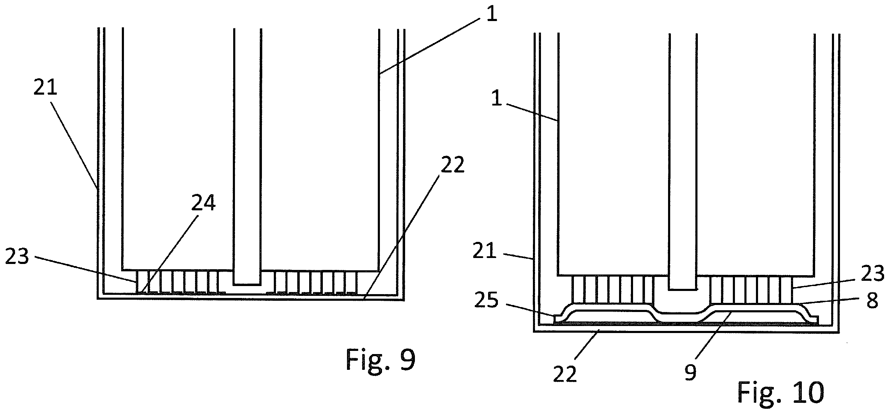

Die so hergestellte Einheit aus dem Elektrodenwickel 1 und dem zweiten Kontaktelement 2 mit dem angeschweißten Polelement 17 kann nun in ein becherförmiges Gehäuseteil 21 eingebracht werden. Dabei kann ein erster Randbereich einer ersten Metallfolie 23 einer ersten Elektrode des Elektrodenwickels 1 mit dem Boden 22 des Gehäuseteils 21 verklebt werden. Dies ist beispielhaft in Fig. 9 dargestellt. Dabei können wie im gezeigten Beispiel Teilabschnitte des ersten Randbereichs der ersten Metallfolie 23, insbesondere wie dargestellt um 90°, umgebogen sein, um eine flächige Verklebung zwischen der Metallfolie 23 und dem Boden 22 des Gehäuseteils 21 zu ermöglichen.

In Fig. 10 ist eine alternative Ausführungsform dargestellt, bei der der bei der Herstellung des dargestellten Akkumulators der erste Randbereich der ersten Metallfolie 23 nicht direkt mit dem Boden 22 des Gehäuseteils 21 verklebt, sondern zunächst mit einem ersten Kontaktelement 25 verschweißt wird. Das erste Kontaktelement 25 wiederum wird mit dem Boden 22 des Gehäuseteils 21 verklebt. Die Verschweißung des ersten Kontaktelements 25 mit dem ersten Randbereich der ersten Metallfolie 23 kann dabei analog zum vorstehend beschriebenen Verschweißen des zweiten Kontaktelements 2 mit der zweiten Metallfolie 3 erfolgen. Darüber hinaus kann das erste Kontaktelement 25 analog zum vorstehend beschriebenen zweiten Kontaktelement 2 entsprechende als Sicken 9 ausgeführte vorspringende Bereiche 8 aufweisen, wie dies beispielhaft in Figur 10 dargestellt ist.

### Bezugszeichenliste:

- 1: Elektrodenwickel
- 2: zweites Kontaktelement
- 3: zweite Metallfolie
- 4: erste Fläche
- 5: zweite Fläche
- 6: Laserstrahl
- 7: Öffnung
- 8: vorspringender Bereich
- 9: Sicke
- 10: umgebogener Bereich
- 11: Bereich der Biegung
- 12: Schnittlinie
- 13: Bewegungsbahn
- 14: Vorschubbewegung
- 15: oszillierende Bewegung
- 16: Amplitude
- 17: Polelement
- 18: Dichtfläche
- 19: Gewinde
- 20: Verbindungsbereich
- 21: Becherförmiges Gehäuseteil
- 22: Boden
- 23: erste Metallfolie
- 24: umgebogene Teilabschnitte
- 25: erstes Kontaktelement

## Patentansprüche

1. Verfahren zur Herstellung eines Akkumulators, wobei Metallfolien (3, 23), welche Elektroden des Akkumulators kontaktieren, gemeinsam mit den Elektroden des Akkumulators derart zu einem, zumindest im Wesentlichen, zylindrischen, insbesondere kreiszylindrischen Elektrodenwickel (1) aufgewickelt werden, dass an einer der beiden sich gegenüberliegenden Stirnseiten des Elektrodenwickels (1) ein erster Randbereich einer ersten Metallfolie (23) zur Kontaktierung einer ersten Elektrode gegenüber den anderen schichtförmigen Bestandteilen des Elektrodenwickels (1) vorsteht,
**dadurch gekennzeichnet,**
**dass** der Elektrodenwickel (1) in ein becherförmiges Gehäuseteil (21) mit einem Boden (22) eingebracht und zur Kontaktierung der ersten Elektrode des Akkumulators der erste Randbereich der ersten Metallfolie (23) der ersten Elektrode und/oder ein mit dem ersten Randbereich elektrisch leitend verbundenes erstes Kontaktelement mit dem Boden (22) des Gehäuseteils (21) verklebt wird.

2. Verfahren nach Anspruch 1, **dadurch gekennzeichnet, dass** es sich bei der ersten Elektrode um die Kathode handelt.

3. Verfahren nach Anspruch 1 oder 2, **dadurch gekennzeichnet, dass** das Gehäuseteil (21) aus Aluminium oder einer Aluminiumlegierung ist.

4. Verfahren nach Anspruch 1, **dadurch gekennzeichnet, dass** es sich bei der ersten Elektrode um die Anode handelt.

5. Verfahren nach Anspruch 1 oder 4, **dadurch gekennzeichnet, dass** das Gehäuseteil (21) aus einem Stahl ist.

6. Verfahren nach einem der vorigen Ansprüche, **dadurch gekennzeichnet, dass** das Gehäuseteil (21) tiefgezogen ist.

7. Verfahren nach einem der vorigen Ansprüche, **dadurch gekennzeichnet, dass** der erste Randbereich der ersten Metallfolie (23) vor dem Verkleben des ersten Randbereichs mit dem Boden (22), zumindest in Teilabschnitten (24), derart umgebogen wird, dass sich eine flächige Verklebung von zumindest Teilabschnitten (24) des Randbereichs mit dem Boden (22) ergibt.

8. Verfahren nach einem der Ansprüche 1 bis 6, **dadurch gekennzeichnet, dass** der Randbereich vor dem Verkleben des mit dem Randbereich verbundenen ersten Kontaktelements (25) mit dem Boden (22) mit dem ersten Kontaktelements (25) verschweißt wird.

9. Verfahren nach einem der vorigen Ansprüche, **dadurch gekennzeichnet, dass** zur Kontaktierung einer zweiten Elektrode des Akkumulators eine zweite Metallfolie (3) zur Kontaktierung der zweiten Elektrode mit einem zweiten Kontaktelement (2) verschweißt wird, insbesondere wobei ein zweiter Randbereich der zweiten Metallfolie (3) zur Kontaktierung der zweiten Elektrode gegenüber den anderen schichtförmigen Bestandteilen des Elektrodenwickels (1) vorsteht und dieser Randbereich mit dem zweiten Kontaktelement (2) verschweißt wird.

10. Verfahren nach einem der Ansprüche 8 oder 9, **dadurch gekennzeichnet, dass** zum Verschweißen des ersten Randbereichs mit dem ersten Kontaktelement (25) und/oder zum Verschweißen des zweiten Randbereichs mit dem zweiten Kontaktelement (2) der erste und/oder der zweite Randbereich mit einer rechtwinklig zur jeweiligen Metallfolie (3, 23) orientierten ersten Fläche (4) des jeweiligen Kontaktelements (2, 25) in Kontakt gebracht und durch die Beaufschlagung einer von der ersten Fläche (4) des jeweiligen Kontaktelements (2, 25) abgewandten zweiten Fläche (5) des jeweiligen Kontaktelements (2, 25) mit einem Laserstrahl (6) mit dem jeweiligen Kontaktelement (2, 25) verschweißt wird.

11. Verfahren nach einem der vorigen Ansprüche, **dadurch gekennzeichnet, dass** zum Verschweißen des ersten Randbereichs mit dem ersten Kontaktelement (25) und/oder zum Verschweißen des zweiten Randbereichs mit dem zweiten Kontaktelement (2) ein Bereich (10) der ersten Metallfolie (23) und/oder ein Bereich der zweiten Metallfolie (3), vorzugsweise vor dem Aufwickeln, umgebogen, insbesondere um 180° umgebogen, wird, wobei die erste Metallfolie (23) im Bereich der so gebildeten Umbiegung (11) mit dem ersten Kontaktelement (25) und/oder die zweite Metallfolie (3) im Bereich der so gebildeten Umbiegung (11) mit dem zweiten Kontaktelement (2) verschweißt wird.

12. Verfahren zur Herstellung eines Akkumulators nach einem der vorigen Ansprüche, **dadurch gekennzeichnet, dass** nach dem Einbringen des Elektrodenwickels (1) in das Gehäuseteil (21) und insbesondere nach dem Verkleben des Bodens (22) des Gehäuseteils (21) mit dem ersten Randbereich und/oder dem ersten Kontaktelement (25) der Akkumulator mit einem Elektrolyten befüllt und verschlossen wird.

13. Verfahren zur Herstellung eines Akkumulators nach einem der vorigen Ansprüche, **dadurch gekennzeichnet, dass** vor dem Einbringen des Elektrodenwickels (1) in das Gehäuseteil (21) der erste Randbereich und/oder das erste Kontaktelement (25) mit einem, insbesondere leitfähigen, Klebstoff zum Verkleben des Bodens (22) des Gehäuseteils (21) mit dem ersten Randbereich und/oder dem ersten Kontaktelement (25) versehen wird.

14. Verfahren zur Herstellung eines Akkumulators nach einem der vorigen Ansprüche, **dadurch gekennzeichnet, dass** vor dem Einbringen des Elektrodenwickels (1) in das Gehäuseteil (21) ein Klebstoff zum Verkleben des Bodens (22) des Gehäuseteils (21) mit dem ersten Randbereich und/oder dem ersten Kontaktelement (25) in das Gehäuseteil (21) eingebracht wird.

15. Akkumulator, herstellbar durch ein Verfahren mit einem der vorigen Ansprüche.
